# EUROPEAN PATENT SPECIFICATION

(11) **EP 3 713 152 B1**
(45) Date of publication and mention of the grant of the patent: **25.09.2024**
(21) Application number: 19163731.3
(22) Date of filing: 19.03.2019
(51) Int. Cl.: H04L 12/06, H04L 9/32, H04W 4/40, H04W 12/06, H04L 9/08, H04W 84/18, H04W 88/16

(54) **TECHNIQUES FOR AUTHENTICATING ESTABLISHMENT OF AN AD-HOC COMMUNICATION LINK**
VERFAHREN ZUR AUTHENTIFIZIERUNG DES AUFBAUS EINER AD-HOC-KOMMUNIKATIONSVERBINDUNG
TECHNIQUES PERMETTANT D'AUTHENTIFIER L'ÉTABLISSEMENT D'UNE LIAISON DE COMMUNICATION AD HOC

(43) Date of publication of application: 23.09.2020
(73) Proprietor: Deutsche Telekom AG, 53113 Bonn (DE); Giesecke+Devrient Mobile Security Germany GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- CN-A- 108 882 231
- DE-A1- 102010 033 478
- US-A1- 2018 332 011
- TSG SA WG6: "New SID on Application Architecture for enabling Edge Applications", vol. TSG SA, no. Shenzhen, China; 20190320 - 20190322, 10 March 2019 (2019-03-10), XP051687927, Retrieved from the Internet <URL:http://www.3gpp.org/ftp/tsg%5Fsa/WG6%5FMissionCritical/Latest%5Fdraft%5FSA6%5FSpecs/for%5Fchecking/DRAFT%5FSA%5Fdocs/SP%2D190065%5FNew%5FSID%5Fon%5FApplication%20Architecture%20for%20enabling%20Edge%20Applications/SP%2D190065%2Ezip> [retrieved on 20190310]

## Description

### TECHNICAL FIELD

The disclosure relates to techniques for authenticating establishment of an ad-hoc communication link between at least two communication devices, e.g. cars or Internet-of-Things (IoT) devices or mobile terminals, in a communication network, e.g. a 5G communication network.

### BACKGROUND

Edge computing allows for an increased efficiency of executing computer programs associated with communication devices by providing extensive computing capabilities in proximity to the communication devices. Such nodes are commonly arranged at an edge of the communication network and may be referred to as edge computing gateways. Edge computing is of particular interest for fifth-generation, 5G, communication networks, but also for 4G networks, fixed line communication and local area networks.

In addition Edge Computing enables server-based applications to be brought "closer" to the user equipment (UE), i.e. communication device and thus lower latency in the "round trip time" (RTT). In particular, mobile network operators (MNOs) are making efforts to integrate edge computing into their networks. Due to the low latency, it is possible that complex calculations can run on the server (instead of the UE) while still realizing "real-time critical" or "near real-time critical" functionalities. These ad hoc communication scenarios require a large number of new and flexible assigned identities.

Due to the proximity of an edge computing gateway to the communication devices, a low latency and a low round-trip-time, RTT, for exchanging traffic between the edge computing gateway and the communication devices may be achieved.

Currently, there exists no approach for establishing an ad-hoc communication link between at least two communication devices in a fast manner for providing authenticated communications between the at least two communication devices. Typical Challenge-Response-Authentication scenarios are considered as too slow due to complex messaging, verification and calculation procedures.

Such ad-hoc communication links are, however, particularly desirable for vehicle-to-vehicle, V2V, or vehicle-to-everything, V2X, communications.

In that context CN 108 882 231 A teaches an unmanned secure communication authentication protocol that belongs to the field of unmanned motor vehicle ad hoc network information and communication. A vehicle obtains private data from a TA (Trusted Authorizer), generates a pseudonym and a corresponding private key offline and realize user authentication through bilinear mapping, so safety and privacy of the vehicle are ensured. According to the protocol, hash chain elements are taken as keys for generating message authentication codes. In a delay exposure mode, a receiver receive the hash chain elements obtained ina delay mode and verify whether the last message authentication code can be generated or not. According to the protocol, a prediction value is generated and is sent to the receiver, so the receiver can verify validity of a message in real time, and robustness of the protocol is improved. According to the protocol, anonymity and privacy protection effects are achieved, and verifiability and integrity of data can be ensured. The protocol is also characterized by non-repudiation, non-relevance, conditional privacy protection, replay resistance and packet loss resistance.

The documents <TSG SA WG6: "New SID on Application Architecture for enabling Edge Applications", 3GPP DRAFT; SP-190065>, <DE 10 2010 033478 A1>, and <D4: US 2018/332011 A> provide further background information regarding the topic.

### SUMMARY OF THE INVENTION

It is the object of the present invention to provide a concept that solves the above-mentioned problems, in particular to provide a solution for a fast authentication procedure of ad-hoc communication links between communications devices.

The foregoing and other objects are achieved by the subject matter of the independent claims. Further implementation forms are apparent from the dependent claims, the description and the figures.

The disclosure is based on a novel authentication procedure for authenticating establishment of an ad-hoc communication link between at least two communication devices in a communication network, in particular a 5G communication network. The ad-hoc communication links may be communication links over the air interface to exchange time critical information, e.g. in car-2-car communication scenarios. 5G data links of low latency ensure fast authentication at an EDGE gateway (also referred to as edge computing gateway hereinafter) and also a key exchange between two (or more) parties A and B that do not know each other. The EDGE gateway knows both (or all) parties A and B. After successful authentication either symmetrically or asymmetrically, a symmetric key or alternatively an asymmetric key is provided to A and B so that both parties are secured without further involvement of the EDGE device to be able to communicate. In an implementation example, for communication with the EDGE gateway, a 5G "low latency slice" may be applied to quickly establish the secure connection.

This novel authentication procedure provides the technical advantage that parties which are unknown to each other can establish a secure communication connection within a very short time. The authentication procedure can be advantageously applied in safety-critical applications, for example in road traffic scenarios.

The edge computing gateway performs a fast authentication procedure with at least two communication devices. Such a fast authentication procedure can be an encrypted device ID with pre-shared keys.

The edge computing gateway generates a cryptographic key which is transmitted to the at least two communication devices. The cryptographic key serves as a shared secret between the communication devices and is consequently used for authenticating the ad-hoc communication link by the communication devices.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a communication network. The term communication network or communication system refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication device or communication terminal or user equipment as described above, for example, a mobile phone or a mobile device with mobile adapter or a machine terminal or an loT device or a communication device installed in a vehicle.

According to a first aspect the invention relates to an edge computing gateway for authenticating establishment of an ad-hoc communication link between at least two communication devices, in particular cars, in a communication network, in particular a 5G communication network, the edge computing gateway comprising: a communication interface configured to communicate over respective communication links with the at least two communication devices; a processor configured to authenticate the at least two communication devices over the respective communication links based on an authentication procedure that meets real-time requirements with respect to communication latency; and a key generator configured to generate a cryptographic key associated with the at least two communication devices, wherein the communication interface is configured to transmit the cryptographic key to a respective communication device of the at least two communication devices in response to the authentication of the respective communication device.

Such edge computing gateway allows authenticating establishment of an ad-hoc communication link between two or more communication devices, e.g. mobile devices or communication arrangements located in cars or trucks or Internet-of-Things (loT) endpoints, in a fast manner for providing authenticated communication between the communication devices. The edge computing gateway allows authentication of the communication link under real-time requirements with respect to communication latency. The edge computing gateway thus supports authentication of Ultra reliable and low latency communications (URLLC) according to 5G service category to accommodate emerging services and applications having stringent latency and reliability requirements.

The edge computing gateway thus serves as a trusted entity, in particular trusted relay, for the authentication of the two or more communication devices. Note that the initiation request for communication establishment can also be triggered by any one of the communication devices, e.g. loT endpoint, it does not have to be the edge computing gateway. The edge computing gateway is rather a key broker for enabling the authentication process.

In an exemplary implementation form, the edge computing gateway comprises a security enclave, in particular a hardware security module, HSM, comprising the key generator, wherein the security enclave is configured to generate and protect the cryptographic keys and is operable independently from the processor and the communication interface, wherein the security enclave grants higher security requirements than the processor and the communication interface.

Such edge computing gateway provides the technical advantage of separation of security domains within the edge computing gateway providing higher security requirements for the key generator; and lower security requirements for the communication interface and the processor.

According to the invention, the edge computing gateway, the authentication procedure that meets real-time requirements with respect to communication latency is based on a message exchange between the edge computing gateway and the at least two communication devices, wherein the message exchange is completed within a time interval in which the at least two communication devices, in particular the at least two cars, have not yet moved outside a pre-defined area.

Such edge computing gateway provides the technical advantage that the authentication process can be completed within a predetermined time interval that corresponds to a maximum movement of the communication devices, e.g. cars within a pre-defined area. Hence, the edge computing gateway can support real-time requirements. The pre-defined area may for example be characterized by a movement radius of the communication devices, e.g. a radius of 1 meter, 10 meters, 20 meters, etc.

In an exemplary implementation form of the edge computing gateway, the authentication procedure is a symmetric authentication procedure that is based on pre-shared cryptographic keys between the edge computing gateway and the at least two communication devices.

Such edge computing gateway provides the technical advantage that known or standardized authentication procedures for authenticating communication devices within the communication network can be applied, e.g. symmetric authentication procedures based on common shared key. This reduces computational complexity of the edge computing gateway and the whole communication system.

In an exemplary implementation form, the edge computing gateway is personalized with a symmetric secret key during production, which symmetric secret key is also shared with the at least two communication devices.

This provides the technical advantage that by providing the symmetric secret key during the production process within a secure environment to the edge computing gateway and the communication devices, this symmetric key is kept secret and cannot be violated by an attacking device outside the secure production environment.

In an exemplary implementation form of the edge computing gateway, for each communication device of the at least two communication devices a separate key is chosen during production; and the edge computing device is configured to hold all the separate keys for performing the authentication procedure with the at least two communication devices.

This provides the technical advantage that security can be enhanced when each communication device has its own key. When an attacker can acquire a key of one device, authentication procedure for the other devices is still safe.

In an exemplary implementation form of the edge computing gateway, for a group of communication devices a common key is chosen during production; and the edge computing device is configured to hold the common key for performing the authentication procedure with the group of communication devices.

This provides the technical advantage that communication groups can be formed that have their group-specific keys. For example, a platoon of cars moving in one direction can form one such group with a first key and another platoon moving in another direction can form another group with a second key. Or in another example, a first network of communication devices, e.g. loT devices of a first home network, can form a first group and a second network of communication devices, e.g. loT devices of a second home network, can form a second group. This reduces computational complexity of the authentication procedure, in particular for authenticating a large number of communication devices.

In an exemplary implementation form of the edge computing gateway, the authentication procedure is an asymmetric authentication procedure that is based on a public key hold on the edge computing gateway and a respective protected private key in the at least two communication devices.

Such edge computing gateway provides the technical advantage that known or standardized authentication procedures for authenticating communication devices within the communication network can be applied, e.g. asymmetric authentication procedures based on public/private key pair. This reduces computational complexity of the edge computing gateway and the whole communication system.

In an exemplary implementation form of the edge computing gateway, the edge computing gateway is personalized with an asymmetric public key during production, wherein the at least two communication devices hold a respective private key corresponding to the asymmetric public key.

This provides the technical advantage that by providing the asymmetric public key to the edge computing gateway and the corresponding private keys to the communication devices during the production process within a secure environment, these key pairs are kept secret and cannot be violated by an attacking device outside the secure production environment.

In an exemplary implementation form of the edge computing gateway, the asymmetric public key is produced according to a key hierarchy that allows authentication of a respective communication device based on its individual private key.

This provides the technical advantage that using a key hierarchy provides a powerful pattern for storing the communication devices' cryptographic keys. It also allows to use different keys for different communication devices while allowing to focus the protection efforts on the master key. An important aspect of a key hierarchy is that the master key can decrypt all of the other keys.

In an exemplary implementation form of the edge computing gateway, the edge computing device is configured to: encrypt a public key of the respective communication device with an own private key during production; and receive the encrypted public key from the respective communication device together with an identifier encrypted by the respective communication device based on its individual private key once the respective communication device is in the field.

This provides the technical advantage that security can be enhanced when the public/private key pairs of the communication devices are provided by such 2-stage process.

In an exemplary implementation form of the edge computing gateway, the communication interface is configured to notify the respective communication device of the transmission of the cryptographic key to the respective communication device.

This provides the technical advantage that the ad-hoc communication link is only established after the communication devices are notified, thereby enhancing security as no uninvolved device such as an attacking device can initiate an authentication process.

In an exemplary implementation form of the edge computing gateway, the communication interface is configured to communicate with the at least two communication devices by using a same frequency spectrum for each communication device or by using different frequency spectra for at least two communication devices.

This provides the technical advantage that different types of communication devices can establish an authenticated ad-hoc communication link, for example communication devices using different radio access technologies, RATs or communication devices according to different standards. For example, a 5G device can establish an ad-hoc communication link with a 4G device or with a Wi-Fi device.

In an exemplary implementation form of the edge computing gateway, the at least two communication devices operate under a common network slice with respect to virtualization and service configuration in 5G, the common network slice supporting Ultra Reliable and Low Latency Communications, URLLC, according to 5G, wherein the edge computing gateway is configured to receive and deploy a computer program configuring the common network slice.

The computer program for configuring the common network slice can be processed on the edge computing gateway, thereby providing flexible and fast configuration of the 5G ad-hoc network. This provides the technical advantage of abstraction of the functionality of an edge computing gateway and differentiation with regard to other kinds of nodes used within the communication network.

The edge computing gateway is suited for 5G communication networks but may also be suited for other types of communication networks, such as 4G networks, fixed line communication and local area networks.

In an exemplary implementation form, the edge computing gateway is arranged at an edge of the communication network. This provides the technical advantage of reduced latency for initiating and authenticating the communication link between the communication devices.

According to a second aspect, the invention relate to a communication device for authenticating establishment of an ad-hoc communication link with at least one further communication device, in particular at least one car, in a communication network, in particular a 5G communication network, the communication device comprising: a communication interface configured to communicate with an edge computing gateway over a communication link; and a processor configured to perform an authentication procedure over the communication link with the edge computing gateway for authenticating the communication device, wherein the authentication procedure meets real-time requirements with respect to communication latency, wherein the communication interface is configured to receive a cryptographic key from the edge computing gateway in response to the authentication of the communication device, and to authenticate establishment of the ad-hoc communication link with the at least one further communication device based on the received cryptographic key.

Such a communication device allows authenticating establishment of an ad-hoc communication link with one or more other communication devices, e.g. mobile devices or communication arrangements located in cars or trucks or Internet-of-Things (loT) endpoints, in a fast manner for providing authenticated communication between the communication devices. The communication device allows authentication of the communication link under real-time requirements with respect to communication latency. The communication device thus supports authentication of Ultra reliable and low latency communications (URLLC) according to 5G service category to accommodate emerging services and applications having stringent latency and reliability requirements.

The communication device may be a user equipment, UE, or any other kind of communication device. The communication device may be arranged within a vehicle or may be an installation for vehicle-to-vehicle, V2V, or vehicle-to-everything, V2X, communications.

The ad-hoc communication link can be a direct ad-hoc communication link between the communication device and a further communication device, or the ad-hoc communication link can be an indirect ad-hoc communication link conveyed by an edge computing gateway between the communication device and the at least one further communication device.

Different routes for exchanging traffic between the communication device and the at least one further communication device may be used. For example, by selecting an optimum route reduced latency of the ad-hoc communication link can be guaranteed.

The processor may be configured to establish the ad-hoc communication link according to the IEEE 802.11p standard. This guarantees suitability for vehicle-to-vehicle, V2V, or vehicle-to-everything, V2X, communications.

The communication interface can be configured to receive a notification from the edge computing gateway of a transmission of the cryptographic key from the edge computing gateway to the one or more further communication devices, and to establish the ad-hoc communication link between the communication device and the at least one further communication device in response to the reception of the notification.

This provides increased efficiency of authenticating the establishment of the ad-hoc communication link. The at least one further communication device has received the cryptographic key and is ready for the establishment of the ad-hoc communication link.

According to a third aspect, the invention relates to a communication system for authenticating communicating over a communication network, comprising: an edge computing gateway according to the first aspect; and at least one communication device according to the second aspect.

The communication devices may have the same functionality.

According to a fourth aspect, the invention relates to a method for operating an edge computing gateway for authenticating establishment of an ad-hoc communication link between at least two communication devices, in particular cars, in a communication network, in particular a 5G communication network, the method comprising: authenticating the at least two communication devices over respective communication links based on an authentication procedure that meets real-time requirements with respect to communication latency; generating a cryptographic key associated with the at least two communication devices; and transmitting the cryptographic key to a respective communication device of the at least two communication devices in response to the authentication of the respective communication device.

Such a method allows authenticating establishment of an ad-hoc communication link between two or more communication devices, e.g. mobile devices or communication arrangements located in cars or trucks or Internet-of-Things (loT) endpoints, in a fast manner for providing authenticated communication between the communication devices. The method allows authentication of the communication link under real-time requirements with respect to communication latency. The method thus supports authentication of Ultra reliable and low latency communications (URLLC) according to 5G service category to accommodate emerging services and applications having stringent latency and reliability requirements.

According to a fifth aspect, the invention relates to a method for operating a communication device for authenticating establishment of an ad-hoc communication link with at least one further communication device, in particular at least one car, in a communication network, in particular a 5G communication network, the method comprising: performing an authentication procedure over a communication link with an edge computing gateway for authenticating the communication device, wherein the authentication procedure meets real-time requirements with respect to communication latency; receiving a cryptographic key from the edge computing gateway in response to the authentication of the communication device; and authenticating establishment of the ad-hoc communication link with the at least one further communication device based on the received cryptographic key.

Such a method allows authenticating establishment of an ad-hoc communication link with one or more other communication devices, e.g. mobile devices or communication arrangements located in cars or trucks or Internet-of-Things (loT) endpoints, in a fast manner for providing authenticated communication between the communication devices. The method allows authentication of the communication link under real-time requirements with respect to communication latency. The method thus supports authentication of Ultra reliable and low latency communications (URLLC) according to 5G service category to accommodate emerging services and applications having stringent latency and reliability requirements.

According to a sixth aspect, the invention relates to a computer program for performing the method according to the fourth aspect when executed by an edge computing gateway or the method according to the fifth aspect when executed by a communication device.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a communication system 100 with an edge computing device 110 and an exemplary number of three communication devices 101, 102, 103 according to the disclosure;
Fig. 2 shows a schematic diagram illustrating a communication system 200 with 5G edge computing gateway 110 serving as a relay for fast authentication of at least two 5G communication endpoints 101, 103 according to the disclosure;
Fig. 3 shows a block diagram of an exemplary edge computing gateway 110 in an ad-hoc communication system 300 according to the disclosure;
Fig. 4 shows a block diagram of an exemplary communication device 101 in an ad-hoc communication system 400 according to the disclosure;
Fig. 5 shows a schematic diagram illustrating a method 500 for operating an edge computing gateway for authenticating establishment of an ad-hoc communication link between at least two communication devices according to the disclosure; and
Fig. 6 shows a schematic diagram illustrating a method 600 for operating a communication device for authenticating establishment of an ad-hoc communication link with at least one further communication device according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following section, edge computing nodes and edge computing devices are described. Edge computing is a distributed computing paradigm in which computation is largely or completely performed on distributed device nodes known as smart devices or edge devices as opposed to primarily taking place in a centralized cloud environment. The eponymous "edge" refers to the geographic distribution of computing nodes in the network as Internet of Things devices, which are at the "edge" of an enterprise, metropolitan or other network. The motivation is to provide server resources, data analysis and artificial intelligence ("ambient intelligence") closer to data collection sources and cyber-physical systems such as smart sensors and actuators. Edge computing is seen as important in the realization of physical computing, smart cities, ubiquitous computing and the Internet of Things.

Edge computing pushes applications, data and computing power (services) away from centralized points to the logical extremes of a network. Edge computing takes advantage of microservices architectures to allow some portion of applications to be moved to the edge of the network. Edge Computing moves fragments of application logic out to the edge. As a technological paradigm, edge computing may be architecturally organized as peer-to-peer computing, autonomic (self-healing) computing, grid computing, and by other names implying non-centralized availability.

In the following, cryptographic keys are described as used in this disclosure. There are two primary types of cryptographic keys, symmetric and asymmetric. The latter one always comes in mathematically-related pairs consisting of a private key and a public key. The security of cryptographic applications critically depends on symmetric keys and private keys always being kept secret, whilst public keys, as their name suggests, are not secret. The difference between symmetric and asymmetric keys can be illustrated based on the example of encrypting a message to protect its confidentiality. Symmetric key encryption algorithms use a single symmetric key for both encryption and decryption, while asymmetric key encryption algorithms (also known as public key algorithms) use two different but related keys for encryption and decryption.

Symmetric algorithms have the advantage that they are much faster than asymmetric algorithms and can handle thousands of keys with very little computing overhead. However, their disadvantage is that a symmetric key must be kept secret, and yet has to be transmitted to the receiving side, which means that there is a possibility of being intercepted and used by an eavesdropper to maliciously decrypt the message.

In the following, latency critical requirements as applied in this disclosure are described. For the 5th generation (5G) mobile communications, the ITU has defined three service categories: Enhanced Mobile Broadband (eMBB), Ultra Reliable Low Latency Communications (URLLC), and Massive Machine-Type Communications (mMTC). Ultra-Reliable and Low Latency Communications is a new service category in 5G to accommodate emerging services and applications having stringent latency and reliability requirements such as factory automation, autonomous driving, and remote surgery. These are services that must have the shortest response times and virtually no failure. Like automatic driver assistants that automatically control motor vehicles, or the remote maintenance of plants. These applications require sub-millisecond latency with error rates that are lower than 1 packet loss in 10⁶ packets.

In the following, ad-hoc communication links and ad-hoc communication networks are described. The term "ad-hoc" generally signifies a solution designed for a specific problem or task, non-generalizable, and not intended to be able to be adapted to other purposes. Ad hoc can also be an adjective describing the temporary, provisional, or improvised methods to deal with a particular problem. An ad-hoc network is ad hoc because it does not rely on a pre-existing infrastructure, such as routers in wired networks or access points in managed (infrastructure) wireless networks. Instead, each node participates in routing by forwarding data for other nodes, so the determination of which nodes forward data is made dynamically on the basis of network connectivity and the routing algorithm in use. A mobile ad hoc network is a continuously self-configuring, self-organizing, infrastructure-less network of mobile devices connected without wires. It is sometimes known as "on-the-fly" networks or spontaneous networks.

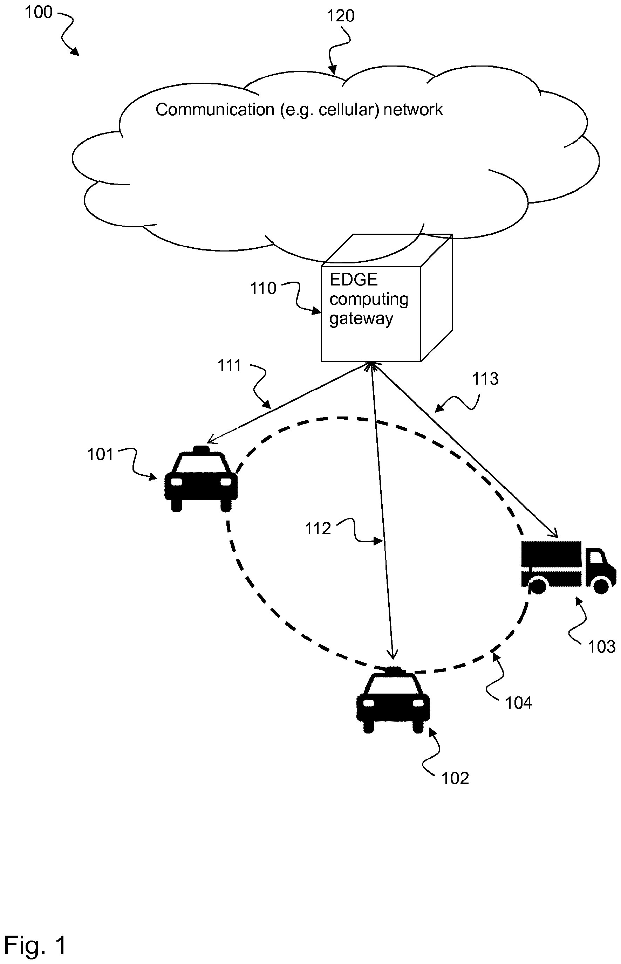

Fig. 1 shows a schematic diagram illustrating a communication system 100 with an edge computing device 110 and an exemplary number of three communication devices 101, 102, 103 according to the disclosure.

The communication system 100 comprises an edge computing gateway 110 located at an edge of a communication network 120, e.g. a cellular network and an exemplary number of three communication devices 101, 102, 103 illustrated as vehicles, i.e. cars or trucks. These communication devices may be installed in the vehicles or used by drivers of the vehicles. The communication network 120 may be a 5G communication network or any other kind of network.

The edge computing gateway 110 is used for authenticating establishment of an ad-hoc communication link 104 between all or a subset of the three communication devices 101, 102, 103. The edge computing gateway 110 communicates over respective communication links 111, 112, 113 with the communication devices 101, 102, 103 and authenticates the communication devices 101, 102, 103 over the respective communication links 111, 112, 113 based on an authentication procedure that meets real-time requirements with respect to communication latency. The edge computing gateway 110 uses a key generator to generate a cryptographic key associated with the communication devices 101, 102, 103. For example, a common cryptographic key associated with all communication devices 101, 102, 103 can be used or individual cryptographic keys associated with individual communication devices 101, 102, 103 may be used. Alternatively, a cryptographic key associated with a subset of the communication devices, e.g. a common key for communication devices 101 and 102 may be used. The edge computing gateway 110 transmits the cryptographic key to a respective communication device 101, 102, 103 in response to the authentication of the respective communication device. For example, a first cryptographic key is transmitted to the first communication device 101 in response to the authentication of the first communication device, a second cryptographic key is transmitted to the second communication device 102 in response to the authentication of the second communication device 102 and a third cryptographic key is transmitted to the third communication device 103 in response to the authentication of the third communication device 103.

The communication devices 101, 102, 103 form a wireless ad hoc network or a mobile ad hoc network, i.e. a decentralized type of wireless network. The network is ad hoc because it does not rely on a pre-existing infrastructure, such as routers in wired networks or access points in managed (infrastructure) wireless networks. Instead, each node, here communication device 101, 102, 103, participates in routing by forwarding data for other nodes, so the determination of which nodes forward data is made dynamically on the basis of network connectivity and the routing algorithm in use.

In the example of Fig. 1, the vehicles 101, 102, 103 form a vehicular ad-hoc network that is used for communication between the vehicles 101, 102, 103 and roadside equipment. Such a vehicular ad hoc network is a kind of artificial intelligence that helps vehicles to behave in intelligent manners during vehicle-to-vehicle collisions and accidents. The vehicles 101, 102, 103 are using radio waves to communicate with each other, creating communication networks instantly on-the-fly while the vehicles 101, 102, 103 are moving on the roads.

While the preferred solution is that the communication links 111, 112, 113 are sidelinks from vehicle to vehicle without using the infrastructure of the communication network 120 like their base stations or access points, it is noted that in another implementation of the ad-hoc network, the ad-hoc links may be links via base stations or access points (not shown) of the communication network 120. However, in the preferred case of sidelinks, communication latency can be significantly reduced.

Alternatively, the ad-hoc communication link 104 may be established between Internet-of-Things (IoT) devices, e.g. loT devices in a home automation network that dynamically form a home ad-hoc network. For example, with each new sensor or actuator used in the home automation network, the ad-hoc network is enlarged. With each outdated or broken sensor or actuator leaving the home automation network, the ad-hoc network is reduced.

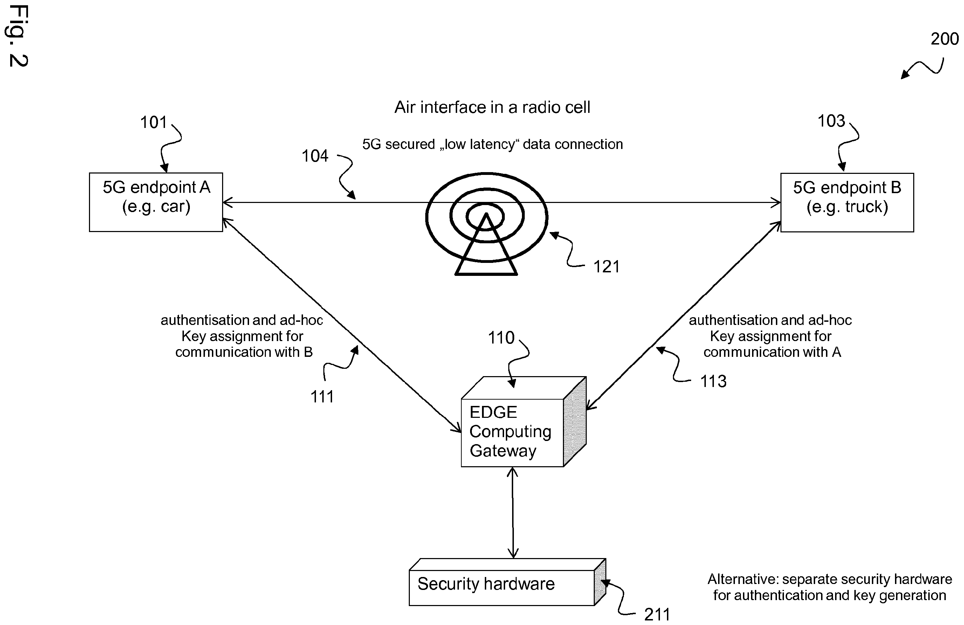

Fig. 2 shows a schematic diagram illustrating a communication system 200 with 5G edge computing gateway 110 serving as a relay for fast authentication of at least two 5G communication endpoints 101, 103 according to the disclosure.

The communication system 200 comprises a 5G edge computing gateway 110 and an exemplary number of two 5G communication endpoints 101, 103 that may correspond to the vehicles 101 and 103 described above with respect to Fig. 1. Both 5G communication endpoints 101, 103 establish an ad-hoc communication link 104 via air interface in a radio cell. The ad-hoc communication link 104 may be a communication link over the air interface, e.g. served by a radio cell 121 such as a gNodeB 121 to exchange time critical information, e.g. in car-2-car communication scenarios. 5G data links of low latency ensure fast authentication at the EDGE gateway 110 and also a key exchange between two (or more) parties A, 101 and B, 103 that do not know each other. The EDGE gateway 110 knows both parties A, 101 and B, 103. After successful authentication either symmetrically or asymmetrically, a symmetric key or alternatively an asymmetric key is provided 111, 113 to A, 101 and B, 103 so that both parties are secured without further involvement of the EDGE device 110 to be able to communicate. In an implementation example, for communication with the EDGE gateway, a 5G secured low latency slice may be applied to quickly establish the secure connection.

This novel authentication procedure provides the advantage that parties 101, 103 which are unknown to each other can establish a secure communication connection 104 within a very short time, e.g. within a millisecond when using the 5G supported URLLC service. The authentication procedure can be advantageously applied in safety-critical applications, for example in road traffic scenarios, e.g. as described above with respect to Fig. 1.

The EDGE gateway 110 may be supported by a security hardware 211, referred hereinafter as security enclave that may be arranged nearby or collocated with the EDGE gateway or even integrated within the EDGE gateway. Such security enclave 211 may be a hardware security module (HSM) in which a key generator may be implemented. The security enclave 211 generates and protects the cryptographic keys and is operable independently from a processor and a communication interface that are performing the communication tasks. The security enclave 211 is configured to grant higher security requirements to the key generator than the processor and the communication interface in order to separate and secure the keys from the common communication tasks.

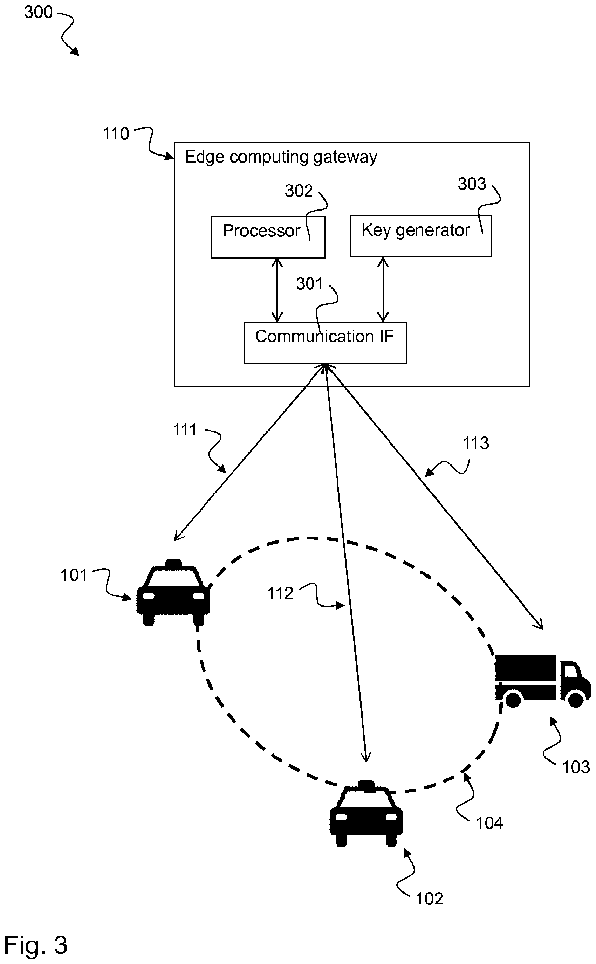

Fig. 3 shows a block diagram of an exemplary edge computing gateway 110 in an ad-hoc communication system 300 according to the disclosure.

The edge computing gateway 110 is used for authenticating establishment of an ad-hoc communication link 104 between at least two communication devices 101, 102, 103, e.g. cars, in a communication network 120, e.g. a 5G communication network as described above with respect to Fig. 1. The communication devices 101, 102, 103 may correspond to vehicles 101, 102, 103 as described above with respect to Fig. 1.

The edge computing gateway 110 comprises a communication interface 301 configured to communicate over respective communication links 111, 112, 113 with the at least two communication devices 101, 102, 103. The edge computing gateway 110 comprises a processor 302 configured to authenticate the at least two communication devices 101, 102, 103 over the respective communication links 111, 112, 113 based on an authentication procedure that meets real-time requirements with respect to communication latency. The edge computing gateway 110 comprises a key generator 303 configured to generate a cryptographic key associated with the at least two communication devices 101, 102, 103. The communication interface 301 is configured to transmit the cryptographic key to a respective communication device of the at least two communication devices 101, 102, 103 in response to the authentication of the respective communication device.

The edge computing gateway 110 may comprise a security enclave, e.g. a security enclave 211 as described above with respect to Fig. 2, in particular a hardware security module, HSM, comprising the key generator 303. The security enclave 211 is configured to generate and protect the cryptographic keys and is operable independently from the processor 302 and the communication interface 301. The security enclave 211 grants higher security requirements to the key generator 303 than to the processor 302 and the communication interface 301.

The authentication procedure that meets real-time requirements with respect to communication latency is be based on a message exchange between the edge computing gateway 110 and the at least two communication devices 101, 102, 103 which message exchange is completed within a time interval in which the at least two communication devices 101, 102, 103, e.g. the at least two cars, have not yet moved outside a pre-defined area.

In an implementation, the authentication procedure may be a symmetric authentication procedure that is based on pre-shared cryptographic keys between the edge computing gateway 110 and the at least two communication devices 101, 102, 103.

The edge computing gateway 110 may be personalized with a symmetric secret key during production, which symmetric secret key is also shared with the at least two communication devices 101, 102, 103.

For each communication device of the at least two communication devices 101, 102, 103 a separate key may be chosen during production. The edge computing gateway 110 may be configured to hold all the separate keys for performing the authentication procedure with the at least two communication devices 101, 102, 103.

In an implementation, for a group of communication devices a common key may be chosen during production. The edge computing device 110 may be configured to hold the common key for performing the authentication procedure with the group of communication devices.

In an implementation, the authentication procedure may be an asymmetric authentication procedure that is based on a public key hold on the edge computing gateway 110 and a respective protected private key in the at least two communication devices 101, 102, 103.

The edge computing gateway 110 may be personalized with an asymmetric public key during production, and the at least two communication devices 101, 102, 103 may hold a respective private key corresponding to the asymmetric public key.

The asymmetric public key may be produced according to a key hierarchy that allows authentication of a respective communication device based on its individual private key.

In an implementation, the edge computing device 110 may be configured to encrypt a public key of the respective communication device with an own private key during production and to receive the encrypted public key from the respective communication device together with an identifier encrypted by the respective communication device based on its individual private key once the respective communication device is in the field.

The communication interface 301 may be configured to notify the respective communication device of the transmission of the cryptographic key to the respective communication device.

In an implementation, the communication interface 301 may be configured to communicate with the at least two communication devices 101, 102, 103 by using a same frequency spectrum for each communication device or by using different frequency spectra for at least two communication devices.

In an implementation, the at least two communication devices 101, 102, 103 may operate under a common network slice with respect to virtualization and service configuration in 5G. This common network slice may support Ultra Reliable and Low Latency Communications, URLLC, according to 5G. The edge computing gateway 110 may be configured to receive and deploy a computer program configuring the common network slice.

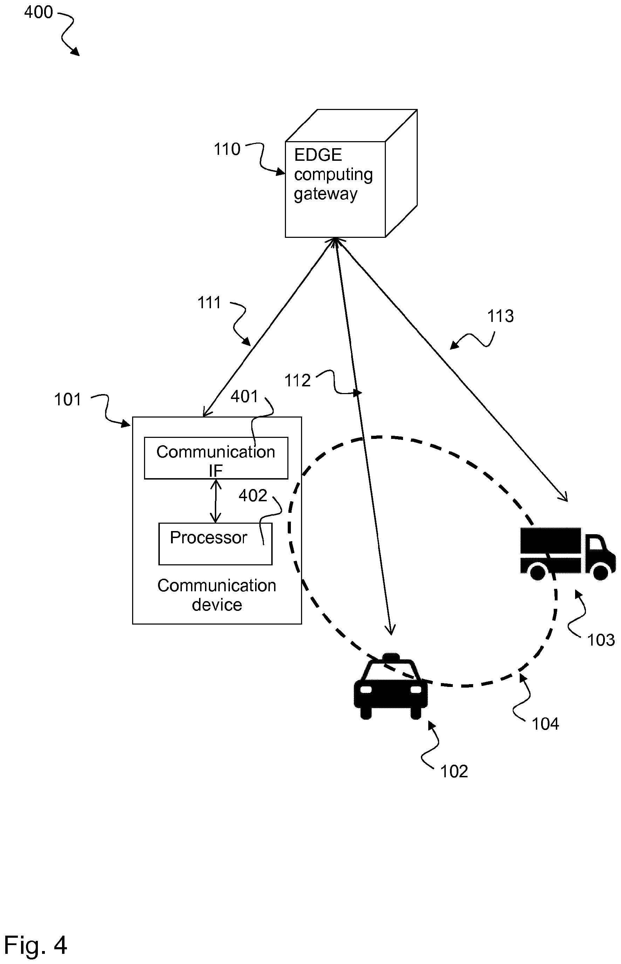

Fig. 4 shows a block diagram of an exemplary communication device 101 in an ad-hoc communication system 400 according to the disclosure.

The communication device 101 is used for authenticating establishment of an ad-hoc communication link 104 with at least one further communication device 102, 103, in particular at least one car, in a communication network 120, in particular a 5G communication network, e.g. as described above with respect to Figures 1 to 3.

The communication device 101 comprises a communication interface 401 configured to communicate with an edge computing gateway 110 over a communication link 111.

The communication device 101 comprises a processor 402 configured to perform an authentication procedure over the communication link 111 with the edge computing gateway 110 for authenticating the communication device 101, e.g. as described above with respect to Figures 1 to 3. The authentication procedure meets real-time requirements with respect to communication latency.

The communication interface 401 is configured to receive a cryptographic key from the edge computing gateway 110 in response to the authentication of the communication device 101, and to authenticate establishment of the ad-hoc communication link 104 with the at least one further communication device 102, 103 based on the received cryptographic key.

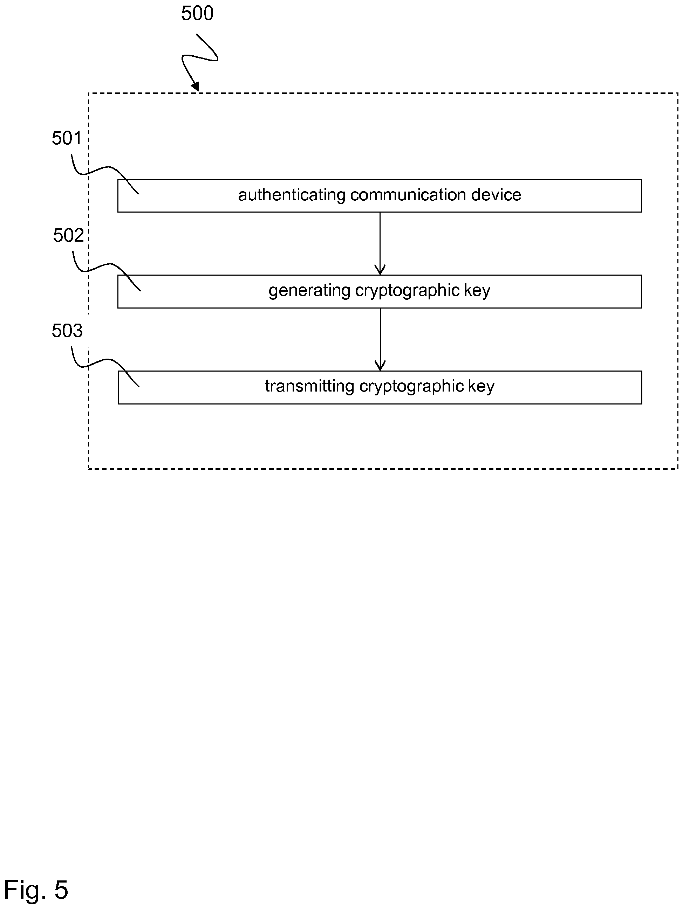

Fig. 5 shows a schematic diagram illustrating a method 500 for operating an edge computing gateway for authenticating establishment of an ad-hoc communication link between at least two communication devices according to the disclosure.

The method 500 can be used for operating an edge computing gateway 110, e.g. as described above with respect to Figures 1 to 4 for authenticating establishment of an ad-hoc communication link 104 between at least two communication devices, in particular cars, in a communication network, in particular a 5G communication network, e.g. as described above with respect to Figures 1 to 4.

The method 500 comprises authenticating 501 the at least two communication devices over respective communication links based on an authentication procedure that meets real-time requirements with respect to communication latency, e.g. as described above with respect to Figures 1 to 4.

The method 500 comprises generating 502 a cryptographic key associated with the at least two communication devices, e.g. as described above with respect to Figures 1 to 4.

The method 500 comprises transmitting 503 the cryptographic key to a respective communication device of the at least two communication devices in response to the authentication of the respective communication device, e.g. as described above with respect to Figures 1 to 4.

Such a method 500 allows authenticating establishment of an ad-hoc communication link between two or more communication devices, e.g. mobile devices or communication arrangements located in cars or trucks or Internet-of-Things (loT) endpoints, in a fast manner for providing authenticated communication between the communication devices. The method 500 allows authentication of the communication link under real-time requirements with respect to communication latency. The method 500 thus supports authentication of Ultra reliable and low latency communications (URLLC) according to 5G service category to accommodate emerging services and applications having stringent latency and reliability requirements.

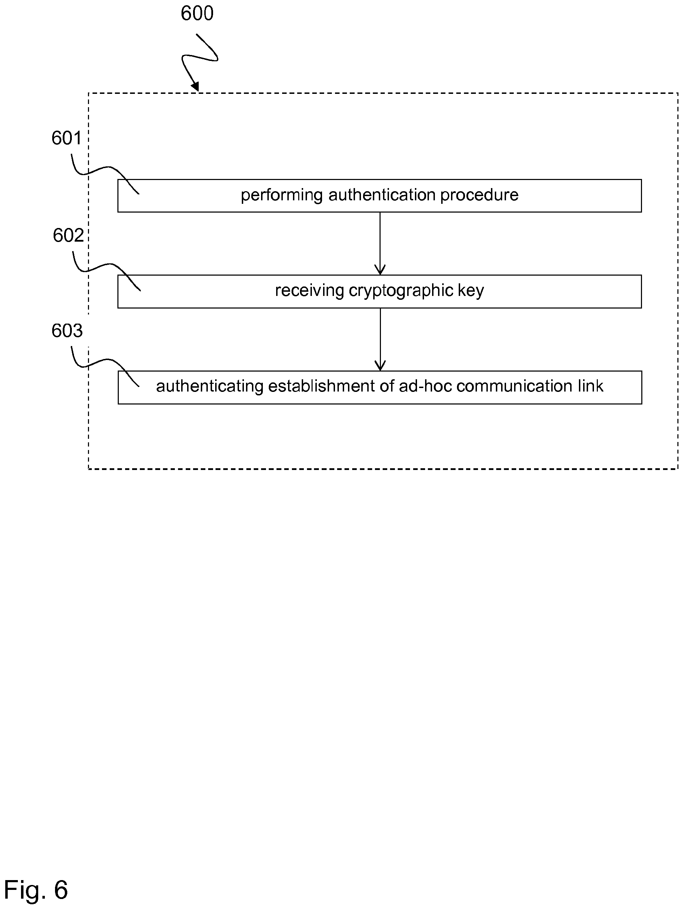

Fig. 6 shows a schematic diagram illustrating a method 600 for operating a communication device for authenticating establishment of an ad-hoc communication link with at least one further communication device according to the disclosure.

The method 600 can be used for operating a communication device for authenticating establishment of an ad-hoc communication link with at least one further communication device, in particular at least one car, in a communication network, in particular a 5G communication network, e.g. as described above with respect to Figures 1 to 4.

The method 600 comprises performing 601 an authentication procedure over a communication link with an edge computing gateway for authenticating the communication device, wherein the authentication procedure meets real-time requirements with respect to communication latency, e.g. as described above with respect to Figures 1 to 4.

The method 600 comprises receiving 602 a cryptographic key from the edge computing gateway in response to the authentication of the communication device, e.g. as described above with respect to Figures 1 to 4.

The method 600 comprises authenticating 603 establishment of the ad-hoc communication link with the at least one further communication device based on the received cryptographic key, e.g. as described above with respect to Figures 1 to 4.

Such a method 600 allows authenticating establishment of an ad-hoc communication link with one or more other communication devices, e.g. mobile devices or communication arrangements located in cars or trucks or Internet-of-Things (loT) endpoints, in a fast manner for providing authenticated communication between the communication devices. The method 600 allows authentication of the communication link under real-time requirements with respect to communication latency. The method 600 thus supports authentication of Ultra reliable and low latency communications (URLLC) according to 5G service category to accommodate emerging services and applications having stringent latency and reliability requirements.

Another aspect of the invention is related to a computer program product comprising program code for performing the methods and procedures or the functionalities described above, when executed on a computer or a processor. The method may be implemented as program code that may be stored on a non-transitory computer medium. The computer program product may implement the techniques described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention.

## Claims

1. An edge computing gateway (110) for authenticating establishment of an ad-hoc communication link (104) between at least two communication devices (101, 102, 103), in particular cars, in a communication network (120), in particular a 5G communication network, the edge computing gateway (110) comprising:
a communication interface (301) configured to communicate over respective communication links (111, 112, 113) with the at least two communication devices (101, 102, 103);
a processor (302) configured to authenticate the at least two communication devices (101, 102, 103) over the respective communication links (111, 112, 113) based on an authentication procedure that meets real-time requirements with respect to communication latency, wherein the authentication procedure that meets real-time requirements with respect to communication latency is based on a message exchange between the edge computing gateway (110) and the at least two communication devices (101, 102, 103), wherein the message exchange is completed within a time interval in which the at least two communication devices (101, 102, 103), in particular the at least two cars, have not yet moved outside a pre-defined area; and
a key generator (303) configured to generate a cryptographic key associated with the at least two communication devices (101, 102, 103);
wherein the communication interface (301) is configured to transmit the cryptographic key to a respective communication device of the at least two communication devices (101, 102, 103) in response to the authentication of the respective communication device.

2. The edge computing gateway (110) of claim 1, comprising:
a security enclave (211), in particular a hardware security module, HSM, comprising the key generator (303), wherein the security enclave (211) is configured to generate and protect the cryptographic keys and is operable independently from the processor (302) and the communication interface (301),
wherein the security enclave (211) grants higher security requirements than the processor (302) and the communication interface (301).

3. The edge computing gateway (110) of one of the preceding claims, wherein the authentication procedure is a symmetric authentication procedure that is based on pre-shared cryptographic keys between the edge computing gateway (110) and the at least two communication devices (101, 102, 103).

4. The edge computing gateway (110) of claim 3, wherein the edge computing gateway (110) is personalized with a symmetric secret key during production, which symmetric secret key is also shared with the at least two communication devices (101, 102, 103).

5. The edge computing gateway (110) of claim 4, wherein for each communication device of the at least two communication devices (101, 102, 103) a separate key is chosen during production; and wherein the edge computing gateway (110) is configured to hold all the separate keys for performing the authentication procedure with the at least two communication devices (101, 102, 103).

6. The edge computing gateway (110) of claim 4, wherein for a group of communication devices a common key is chosen during production; and wherein the edge computing device (110) is configured to hold the common key for performing the authentication procedure with the group of communication devices.

7. The edge computing gateway (110) of one of claims 1 to 2, wherein the authentication procedure is an asymmetric authentication procedure that is based on a public key hold on the edge computing gateway (110) and a respective protected private key in the at least two communication devices (101, 102, 103).

8. The edge computing gateway (110) of claim 7, wherein the edge computing gateway (110) is personalized with an asymmetric public key during production, wherein the at least two communication devices (101, 102, 103) hold a respective private key corresponding to the asymmetric public key.

9. The edge computing gateway (110) of claim 8, wherein the asymmetric public key is produced according to a key hierarchy that allows authentication of a respective communication device based on its individual private key.

10. The edge computing gateway (110) of claim 9, wherein the edge computing device (110) is configured to:
encrypt a public key of the respective communication device with an own private key during production; and
receive the encrypted public key from the respective communication device together with an identifier encrypted by the respective communication device based on its individual private key once the respective communication device is in the field.

11. The edge computing gateway (110) of any one of the preceding claims, wherein the communication interface (301) is configured to notify the respective communication device of the transmission of the cryptographic key to the respective communication device.

12. The edge computing gateway (110) of any one of the preceding claims, wherein the communication interface (301) is configured to communicate with the at least two communication devices (101, 102, 103) by using a same frequency spectrum for each communication device or by using different frequency spectra for at least two communication devices.

13. The edge computing gateway (110) of any one of the preceding claims, wherein the at least two communication devices (101, 102, 103) operate under a common network slice with respect to virtualization and service configuration in 5G, the common network slice supporting Ultra Reliable and Low Latency Communications, URLLC, according to 5G, wherein the edge computing gateway (110) is configured to receive and deploy a computer program configuring the common network slice.

14. A communication device (101) for authenticating establishment of an ad-hoc communication link (104) with at least one further communication device (102, 103), in particular at least one car, in a communication network (120), in particular a 5G communication network, the communication device (101) comprising:
a communication interface (401) configured to communicate with an edge computing gateway (110) over a communication link (111); and
a processor (402) configured to perform an authentication procedure over the communication link (111) with the edge computing gateway (110) for authenticating the communication device (101), wherein the authentication procedure meets real-time requirements with respect to communication latency, wherein the authentication procedure that meets real-time requirements with respect to communication latency is based on a message exchange between the edge computing gateway (110) and the at least two communication devices (101, 102, 103), wherein the message exchange is completed within a time interval in which the at least two communication devices (101, 102, 103), in particular the at least two cars, have not yet moved outside a pre-defined area and
wherein the communication interface (401) is configured to receive a cryptographic key from the edge computing gateway (110) in response to the authentication of the communication device (101), and to authenticate establishment of the ad-hoc communication link (104) with the at least one further communication device (102, 103) based on the received cryptographic key.

## Patentansprüche

1. Edge-Computing-Gateway (110) zum Authentifizieren eines Herstellens einer Ad-hoc-Kommunikationsverbindungsstrecke (104) zwischen mindestens zwei Kommunikationsvorrichtungen (101, 102, 103), insbesondere Autos, in einem Kommunikationsnetzwerk (120), insbesondere einem 5G-Kommunikationsnetzwerk, wobei das Edge-Computing-Gateway (110) aufweist:
eine Kommunikationsschnittstelle (301), die dazu eingerichtet ist, über jeweilige Kommunikationsverbindungsstrecken (111, 112, 113) mit den mindestens zwei Kommunikationsvorrichtungen (101, 102, 103) zu kommunizieren;
einen Prozessor (302), der dazu eingerichtet ist, die mindestens zwei Kommunikationsvorrichtungen (101, 102, 103) über die jeweiligen Kommunikationsverbindungsstrecken (111, 112, 113) basierend auf einer Authentifizierungsprozedur zu authentifizieren, welche Echtzeitanforderungen in Bezug auf eine Kommunikationslatenz erfüllt, wobei die Authentifizierungsprozedur, welche die Echtzeitanforderungen in Bezug auf die Kommunikationslatenz erfüllt, auf einem Nachrichtenaustausch zwischen dem Edge-Computing-Gateway (110) und den mindestens zwei Kommunikationsvorrichtungen (101, 102, 103) beruht, wobei der Nachrichtenaustausch innerhalb eines Zeitintervalls abgeschlossen wird, innerhalb dessen sich die mindestens zwei Kommunikationsvorrichtungen (101, 102, 103), insbesondere die mindestens zwei Autos, noch nicht aus einem vordefinierten Bereich herausbewegt haben; und
einen Schlüsselgenerator (303), der dazu eingerichtet ist, einen kryptographischen Schlüssel zu erzeugen, der mit den mindestens zwei Kommunikationsvorrichtungen (101, 102, 103) assoziiert ist;
wobei die Kommunikationsschnittstelle (301) dazu eingerichtet ist, den kryptographischen Schlüssel in Reaktion auf die Authentifizierung einer jeweiligen Kommunikationsvorrichtung der mindestens zwei Kommunikationsvorrichtungen (101, 102, 103) an die jeweilige Kommunikationsvorrichtung zu übertragen.

2. Edge-Computing-Gateway (110) nach Anspruch 1, aufweisend:
eine Sicherheitsenklave (211), insbesondere ein Hardware-Sicherheitsmodul, HSM, umfassend den Schlüsselgenerator (303), wobei die Sicherheitsenklave (211) dazu eingerichtet ist, die kryptographischen Schlüssel zu erzeugen und zu schützen, und unabhängig von dem Prozessor (302) und der Kommunikationsschnittstelle (301) betriebsfähig ist,
wobei die Sicherheitsenklave (211) höhere Sicherheitsanforderungen als der Prozessor (302) und die Kommunikationsschnittstelle (301) gewährt.

3. Edge-Computing-Gateway (110) nach einem der vorherigen Ansprüche, wobei die Authentifizierungsprozedur eine symmetrische Authentifizierungsprozedur ist, die auf vorab zwischen dem Edge-Computing-Gateway (110) und den mindestens zwei Kommunikationsvorrichtungen (101, 102, 103) geteilten kryptographischen Schlüsseln beruht.

4. Edge-Computing-Gateway (110) nach Anspruch 3, wobei das Edge-Computing-Gateway (110) bei der Herstellung mit einem symmetrischen sicheren Schlüssel personalisiert ist, wobei der symmetrische sichere Schlüssel außerdem mit den mindestens zwei Kommunikationsvorrichtungen (101, 102, 103) geteilt ist.

5. Edge-Computing-Gateway (110) nach Anspruch 4, wobei für jede Kommunikationsvorrichtung der mindestens zwei Kommunikationsvorrichtungen (101, 102, 103) bei der Herstellung ein separater Schlüssel ausgewählt worden ist, und wobei das Edge-Computing-Gateway (110) dazu eingerichtet ist, alle die separaten Schlüssel zum Durchführen der Authentifizierungsprozedur mit den mindestens zwei Kommunikationsvorrichtungen (101, 102, 103) vorzuhalten.

6. Edge-Computing-Gateway (110) nach Anspruch 4, wobei bei der Herstellung für eine Gruppe von Kommunikationsvorrichtungen ein gemeinsamer Schlüssel ausgewählt worden ist, und wobei die Edge-Computing-Vorrichtung (110) dazu eingerichtet ist, den gemeinsamen Schlüssel zum Durchführen der Authentifizierungsprozedur mit der Gruppe von Kommunikationsvorrichtungen vorzuhalten.

7. Edge-Computing-Gateway (110) nach einem der Ansprüche 1 oder 2, wobei die Authentifizierungsprozedur eine asymmetrische Authentifizierungsprozedur ist, die auf einem auf dem Edge-Computing-Gateway (110) vorgehaltenen öffentlichen Schlüssel und einem jeweiligen geschützten privaten Schlüssel in den mindestens zwei Kommunikationsvorrichtungen (101, 102, 103) beruht.

8. Edge-Computing-Gateway (110) nach Anspruch 7, wobei das Edge-Computing-Gateway (110) bei der Herstellung mit einem asymmetrischen öffentlichen Schlüssel personalisiert worden ist, wobei die mindestens zwei Kommunikationsvorrichtungen (101, 102, 103) einen dem asymmetrischen öffentlichen Schlüssel entsprechenden jeweiligen privaten Schlüssel vorhalten.

9. Edge-Computing-Gateway (110) nach Anspruch 8, wobei der asymmetrische öffentliche Schlüssel gemäß einer Schlüsselhierarchie produziert ist, die eine Authentifizierung einer jeweiligen Kommunikationsvorrichtung basierend auf ihrem individuellen privaten Schlüssel ermöglicht.

10. Edge-Computing-Gateway (110) nach Anspruch 9, wobei die Edge-Computing-Vorrichtung (110) dazu eingerichtet ist:
einen öffentlichen Schlüssel der jeweiligen Kommunikationsvorrichtung bei der Herstellung mit einem eigenen privaten Schlüssel zu verschlüsseln; und
den verschlüsselten öffentlichen Schlüssel zusammen mit einer von der jeweiligen Kommunikationsvorrichtung basierend auf ihrem individuellen privaten Schlüssel verschlüsselten Identifikator von der jeweiligen Kommunikationsvorrichtung zu empfangen, wenn die jeweilige Kommunikationsvorrichtung im Feld ist.

11. Edge-Computing-Gateway (110) nach einem der vorherigen Ansprüche, wobei die Kommunikationsschnittstelle (301) dazu eingerichtet ist, die jeweilige Kommunikationsvorrichtung über die Übertragung des kryptographischen Schlüssels an die jeweilige Kommunikationsvorrichtung zu benachrichtigen.

12. Edge-Computing-Gateway (110) nach einem der vorhergehenden Ansprüche, wobei die Kommunikationsschnittstelle (301) dazu eingerichtet ist, mit den mindestens zwei Kommunikationsvorrichtungen (101, 102, 103) unter Verwendung eines selben Frequenzspektrums für jede Kommunikationsvorrichtung oder unter Verwendung unterschiedlicher Frequenzspektren für mindestens zwei Kommunikationsvorrichtungen zu kommunizieren.

13. Edge-Computing-Gateway (110) nach einem der vorhergehenden Ansprüche, wobei die mindestens zwei Kommunikationsvorrichtungen (101, 102, 103) in Bezug auf Virtualisierung und Dienstkonfiguration in 5G unter einem gemeinsamen Netzwerk-Slice arbeiten, wobei der gemeinsame Netzwerk-Slice Ultra Reliable and Low Latency Communications, URLLC, gemäß 5G unterstützt, wobei das Edge-Computing-Gateway (110) dazu eingerichtet ist, ein Computerprogramm zu empfangen und zu deployen, welches den gemeinsamen Netzwerk-Slice konfiguriert.

14. Kommunikationsvorrichtung (101) zum Authentifizieren eines Herstellens einer Ad-hoc-Kommunikationsverbindungsstrecke (104) mit mindestens einer weiteren Kommunikationsvorrichtung (102, 103), insbesondere mit mindestens einem Auto, in einem Kommunikationsnetzwerk (120), insbesondere einem 5G-Kommunikationsnetzwerk, wobei die Kommunikationsvorrichtung (101) aufweist:
eine Kommunikationsschnittstelle (401), die dazu eingerichtet ist, über eine Kommunikationsverbindungsstrecke (111) mit einem Edge-Computing-Gateway (110) zu kommunizieren; und
einen Prozessor (402), der dazu eingerichtet ist, über die Kommunikationsverbindungsstrecke (111) eine Authentifizierungsprozedur mit dem Edge-Computing-Gateway (111) zum Authentifizieren der Kommunikationsvorrichtung (101) durchzuführen, wobei die Authentifizierungsprozedur Echtzeitanforderungen in Bezug auf eine Kommunikationslatenz erfüllt, wobei die Authentifizierungsprozedur, welche die Echtzeitanforderungen in Bezug auf die Kommunikationslatenz erfüllt, auf einem Nachrichtenaustausch zwischen dem Edge-Computing-Gateway (110) und den mindestens zwei Kommunikationsvorrichtungen (101, 102, 103) beruht, wobei der Nachrichtenaustausch innerhalb eines Zeitintervalls abgeschlossen wird, innerhalb dessen sich die mindestens zwei Kommunikationsvorrichtungen (101, 102, 103), insbesondere die mindestens zwei Autos, noch nicht aus einem vordefinierten Bereich herausbewegt haben; und
wobei die Kommunikationsschnittstelle (401) dazu eingerichtet ist, in Reaktion auf die Authentifizierung der Kommunikationsvorrichtung (101) einen kryptographischen Schlüssel von dem Edge-Computing-Gateway (110) zu empfangen und ein Herstellen der Ad-hoc-Kommunikationsverbindungsstrecke (104) mit der mindestens einen weiteren Kommunikationsvorrichtung (102, 103) basierend auf dem empfangenen kryptographischen Schlüssel zu authentifizieren.

## Revendications

1. Passerelle informatique périphérique (110) pour authentifier l'établissement d'une liaison de communication ad hoc (104) entre au moins deux dispositifs de communication (101, 102, 103), en particulier des voitures, dans un réseau de communication (120), en particulier un réseau de communication 5G, la passerelle informatique périphérique (110) comprenant :
une interface de communication (301) configurée pour communiquer sur des liaisons de communication respectives (111, 112, 113) avec les au moins deux dispositifs de communication (101, 102, 103) ;
un processeur (302) configuré pour authentifier les au moins deux dispositifs de communication (101, 102, 103) sur les liaisons de communication respectives (111, 112, 113) sur la base d'une procédure d'authentification qui répond aux exigences en temps réel en ce qui concerne la latence de communication, dans lequel la procédure d'authentification qui répond aux exigences en temps réel en ce qui concerne la latence de communication est basée sur un échange de messages entre la passerelle informatique périphérique (110) et les au moins deux dispositifs de communication (101, 102, 103), l'échange de messages étant terminé dans un intervalle de temps dans lequel les au moins deux dispositifs de communication (101, 102, 103), en particulier les au moins deux voitures, n'ont pas encore quitté une zone prédéfinie ; et
un générateur de clés (303) configuré pour générer une clé cryptographique associée aux au moins deux dispositifs de communication (101, 102, 103) ;
dans laquelle l'interface de communication (301) est configurée pour transmettre la clé cryptographique à un dispositif de communication respectif des au moins deux dispositifs de communication (101, 102, 103) en réponse à l'authentification du dispositif de communication respectif.

2. Passerelle informatique périphérique (110) selon la revendication 1, comprenant :
une enclave de sécurité (211), en particulier un module de sécurité matériel, HSM, comprenant le générateur de clés (303), dans laquelle l'enclave de sécurité (211) est configurée pour générer et protéger les clés cryptographiques et peut fonctionner indépendamment du processeur (302) et de l'interface de communication (301),
dans laquelle l'enclave de sécurité (211) répond à des exigences de sécurité plus élevées que le processeur (302) et l'interface de communication (301).

3. Passerelle informatique périphérique (110) selon une des revendications précédentes, dans laquelle la procédure d'authentification est une procédure d'authentification symétrique qui est basée sur des clés cryptographiques pré-partagées entre la passerelle informatique périphérique (110) et les au moins deux dispositifs de communication (101, 102, 103) .

4. Passerelle informatique périphérique (110) selon la revendication 3, dans laquelle la passerelle informatique périphérique (110) est personnalisée avec une clé secrète symétrique pendant la production, laquelle clé secrète symétrique est également partagée avec les au moins deux dispositifs de communication (101, 102, 103).

5. Passerelle informatique périphérique (110) selon la revendication 4, dans laquelle pour chaque dispositif de communication des au moins deux dispositifs de communication (101, 102, 103), une clé distincte est choisie pendant la production ; et dans laquelle la passerelle informatique périphérique (110) est configurée pour détenir toutes les clés séparées pour effectuer la procédure d'authentification avec les au moins deux dispositifs de communication (101, 102, 103) .

6. Passerelle informatique périphérique (110) selon la revendication 4, dans laquelle pour un groupe de dispositifs de communication une clé commune est choisie pendant la production ; et dans laquelle le dispositif informatique périphérique (110) est configuré pour détenir la clé commune pour effectuer la procédure d'authentification avec le groupe de dispositifs de communication.

7. Passerelle informatique périphérique (110) selon une des revendications 1 à 2, dans laquelle la procédure d'authentification est une procédure d'authentification asymétrique qui est basée sur une clé publique détenue sur la passerelle informatique périphérique (110) et une clé privée protégée respective dans les au moins deux dispositifs de communication (101, 102, 103).

8. Passerelle informatique périphérique (110) selon la revendication 7, dans laquelle la passerelle informatique périphérique (110) est personnalisée avec une clé publique asymétrique pendant la production, dans laquelle les au moins deux dispositifs de communication (101, 102, 103) détiennent une clé privée respective correspondant à la clé publique asymétrique.

9. Passerelle informatique périphérique (110) selon la revendication 8, dans laquelle la clé publique asymétrique est produite selon une hiérarchie de clés qui permet l'authentification d'un dispositif de communication respectif sur la base de sa clé privée individuelle.

10. Passerelle informatique périphérique (110) selon la revendication 9, dans laquelle le dispositif informatique périphérique (110) est configuré pour :
chiffrer une clé publique du dispositif de communication respectif avec une clé privée propre pendant la production ; et
recevoir la clé publique chiffrée du dispositif de communication respectif ainsi qu'un identifiant chiffré par le dispositif de communication respectif sur la base de sa clé privée individuelle une fois que le dispositif de communication respectif est sur le terrain.

11. Passerelle informatique périphérique (110) selon une quelconque des revendications précédentes, dans laquelle l'interface de communication (301) est configurée pour notifier au dispositif de communication respectif la transmission de la clé cryptographique au dispositif de communication respectif.

12. Passerelle informatique périphérique (110) selon une quelconque des revendications précédentes, dans laquelle l'interface de communication (301) est configurée pour communiquer avec les au moins deux dispositifs de communication (101, 102, 103) en utilisant un même spectre de fréquence pour chaque dispositif de communication ou en utilisant des spectres de fréquence différents pour au moins deux dispositifs de communication.

13. Passerelle informatique périphérique (110) selon une quelconque des revendications précédentes, dans laquelle les au moins deux dispositifs de communication (101, 102, 103) fonctionnent sous une tranche de réseau commune par rapport à la virtualisation et à la configuration de service en 5G, la tranche de réseau commune prenant en charge les communications ultra fiables et à faible latence, URLLC, selon la 5G, dans laquelle la passerelle informatique périphérique (110) est configurée pour recevoir et déployer un programme informatique configurant la tranche de réseau commune.

14. Dispositif de communication (101) pour authentifier l'établissement d'une liaison de communication ad hoc (104) avec au moins un autre dispositif de communication (102, 103), en particulier au moins une voiture, dans un réseau de communication (120), en particulier un réseau de communication 5G, le dispositif de communication (101) comprenant :
une interface de communication (401) configurée pour communiquer avec une passerelle informatique périphérique (110) via une liaison de communication (111) ; et
un processeur (402) configuré pour effectuer une procédure d'authentification sur la liaison de communication (111) avec la passerelle informatique périphérique (110) pour authentifier le dispositif de communication (101), dans lequel la procédure d'authentification répond aux exigences en temps réel en ce qui concerne la latence de communication, dans lequel la procédure d'authentification qui répond aux exigences en temps réel en ce qui concerne la latence de communication est basée sur un échange de messages entre la passerelle informatique périphérique (110) et les au moins deux dispositifs de communication (101, 102, 103), dans lequel l'échange de messages est terminé dans un intervalle de temps dans lequel les au moins deux dispositifs de communication (101, 102, 103), en particulier les au moins deux voitures, n'ont pas encore quitté une zone prédéfinie et
dans lequel l'interface de communication (401) est configurée pour recevoir une clé cryptographique de la passerelle informatique périphérique (110) en réponse à l'authentification du dispositif de communication (101), et pour authentifier l'établissement de la liaison de communication ad hoc (104) avec au moins un autre dispositif de communication (102, 103) sur la base de la clé cryptographique reçue.
